# EUROPEAN PATENT APPLICATION

(11) **EP 2 163 813 A1**
(43) Date of publication of application: **17.03.2010**
(21) Application number: 08305716.6
(22) Date of filing: 23.10.2008
(51) Int. Cl.: F21S 9/03, F21Y 101/02, F21W 131/10

(54) **A solar LED instruction sign**

(30) Priority: 11.09.2008 CN 200820136518 U
(71) Applicant: Ninghai Qinghua Electrical Co., Ltd., Yuelong Development Zone Zhejiang, Ninghai county (CN)
(72) Inventor: Jianguo, Chen, NINGBO CITY Zhejiang (CN)
(74) Representative: Vuillermoz, Bruno

(57) **Abstract**

This invention relates to a solar LED instruction sign including a dicrotisc panel (1). A lamp (3) is set up on the said dicrotisc panel (1). The edge of the said lamp (3) fastens to a solar panel (2). There is a LED light (6) on each side of the said lamp (3). The interior of the said lamp is set up a rechargeable battery (8) and control panel (9). The rechargeable battery (8) connects the solar panel (2). The said control panel (9) connects the solar panel (2) with one end and connects the LED lights (6) with the other end. The said dicrotisc panel (1) connects the lamp by installation card, or tranches the lame through located bolt (5). The circumference of the said LED lights are set up reflective sheeting (4). The said located bolt screws together with the fixed nut (7) on the lower end of the dicrotisc panel. The advantages of this model are with low energy consumption, strong illumination, long warning distance, easy installation, safety and reliability.

## Description

### Technology Field

This model concerns a road sign installation, especially involves a road sign- solar LED instruction sign.

### Background Technology

Road signs play a vital role in transportation. They are essential for reducing traffic accidents and maintaining transportation safety. Basically at present, it is to install substance with reflective materials in a transparent body, which are identified at night by exposure of street or vehicle lights. The inadequacy of the device is that it wastes resources. Besides, the device can not play a role in the situation of power cut. But the invention has filled the gap mentioned above.

### Content of the invention

To overcome the shortcomings of existing technology, this invention offers a solar LED instruction sign of low energy consumption, strong illumination, long warning distance, easy installation, safety and reliability.

To solve said technical problems, the invention takes the following technical solutions: a solar LED instruction sign including a dicrotisc panel; a lamp is set up on the said dicrotisc panel, the edge of said lamp fastens a solar panel; there is a LED light on each side of the said lamp; the interior of the lamp is set up a rechargeable battery and a control panel; the rechargeable battery connects the solar panel, the said control panel connects the solar pane with one end and connects the LED lights with the other end.

The said dicrotisc panel connects the lamp by installation card, or tranches the lamp through located bolt. The circumference of the said LED lights are set up reflective sheeting. The said located bolt screws together with the fixed nut on the lower end of the dicrotisc panel.

The advantages of the invention are low energy consumption, strong illumination, long warning distance, easy installation, safety and reliability.

### Description of figures

Figure I, II and III are structure diagrams of the invention.

### Specific implementation ways

Further introductions on this invention through figures and implementation cases:

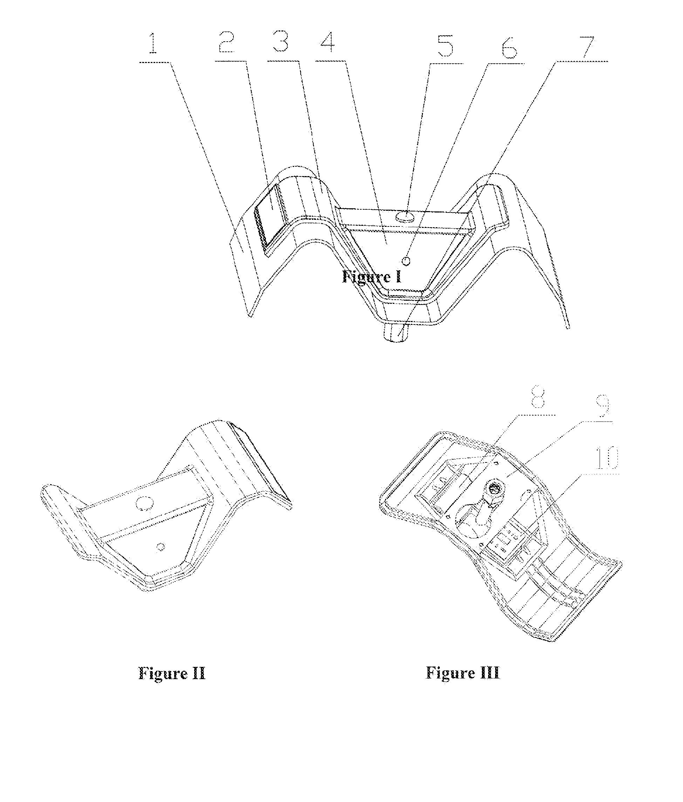

A solar LED instruction sign, including the dicrotisc panel 1. A lamp, 3 is set up on the said dicrotisc panel 1. The edge of the said lamp 3 fastens a solar panel 2. Install the solar panel 2 at the edge of the dicrotisc panel 1- that is at peak rather than through in order to increase the illuminated area of the dicrotisc panel 1. Thus to ensure adequate sunlight exposure to solar panels 2, and transfer solar into electrical energy more effectively. There is a LED light 6 on each side of the said lamp 3. The interior of the said lamp 3 is set up a rechargeable battery 8 (not indicated in the figure) and a control panel 9 (not indicated in the figure). The said rechargeable battery 8 connects the solar panel 2. The said control panel 9 connects the solar panel 2 with one end and connects the LED lights 6 with the other end.

The said dicrotisc panel connects the lamp by installation card.

The said dicrotisc panel 1 tranches the lamp 3 through located bolt 5. The said located bolt 5 can make this device installed on the guardrail through orientation. The circumference of the said LED lights 6 are set up reflective sheeting 4. The said located bolt 5 screws together with the fixed nut 7 on the lower end of the the dicrotisc panel 1.

This device realizes the power supply of self-charging and - discharging through a device composed of the solar panel 2 and rechargeable battery 8. The said device collects sunlight, makes photovoltaic conversion. When the illumination is strong, the solar panels 2 charges rechargeable battery 8, and when the illumination is weak, the rechargeable battery 8 discharges it to let the LED lights 6 shine.

There is an adhesive tape (magnetic or non magnetic tape) between the new utility model and the guardrail, which will bring a flexibility protection between the new utility model and the guardrail and avoid damage of the device in the process of installation and use. In addition to the advantages above, the magnetic tape can fix the device on the guardrail through its own magnetism.

The implementation cases above are just examples for describing the invention, while not limited to practical implementations of said invention. For general technicians in the field, they can also make other changes or modifications in different forms on the basis of the descriptions above. It is impossible to exhaust all the practical implementations here. But all the obvious changes or modifications derived by technology of this device are still in the patent protection of the invention.

## Claims

1. A solar LED instruction sign including a dicrostisc panel **characterized in that** it comprises a lamp set up on the said dicrotisc panel, the edge of said lamp being fastened to a solar panel, said lamp being provided with a LED light on each of its side, the interior of said lamp being provided with a rechargeable battery and a control panel, said rechargeable battery being connected to the solar panel, and said control panel connecting the solar panel with one end and connects the LED lights with the other end.

2. The solar LED instruction sign according to Claim 1, **characterized in that** the dicrotisc panel tranches the lamp through located bolt.

3. The solar LED instruction sign according to Claim 1, **characterized in that** the circumference of the said LED lights are set up reflective sheeting.

4. The solar LED instruction sign according to Claim 2, **characterized in that** the located bolt screws together with the fixed nut on the lower end of the dicrotisc panel.

5. The solar LED instruction sign according to Claim 1, **characterized in that** the dicrotisc panel connects the lamp by installation card.
